# EUROPEAN PATENT APPLICATION

(11) **EP 2 586 846 A1**
(43) Date of publication of application: **01.05.2013**
(21) Application number: 11797866.8
(22) Date of filing: 08.02.2011
(51) Int. Cl.: C09K 17/42, C09K 17/02, C09K 17/06, C09K 17/14, C09K 17/18, E02D 3/12, C09K 103/00

(54) **INJECTION MATERIAL, PROCESS FOR PRODUCTION OF INJECTION MATERIAL, AND INJECTION METHOD**

(30) Priority: 25.06.2010 JP 2010145026
(71) Applicant: Denki Kagaku Kogyo Kabushiki Kaisha, Tokyo 103-8338 (JP)
(72) Inventor: ISHIDA Hideaki, Itoigawa-city Niigata 949-0393 (JP); HIRANO Kenkichi, Itoigawa-city Niigata 949-0393 (JP); YOSHINO Ryoetsu, Itoigawa-city Niigata 949-0393 (JP)
(74) Representative: Vossius & Partner
(86) International application number: PCT/JP2011/052577
(87) International publication number: WO 2011/161978

(57) **Abstract**

The primary object of the invention is to provide a sealing material and an injection method that make sure good effects on stopping water and good durability.

The inventive sealing material comprises a mixture of Materials A and B, the Material A containing fine-particle silica produced by a process in which a slurry having metallic silicon powders dispersed in water is jetted into a flame for burning and oxidization and having an average particle diameter of 1.0 µm or less, a dispersant and water and being subjected to wet dispersion, and the Material B containing a calcium compound having an average particle diameter of 1.0 µm or less, a dispersant and water and being subjected to wet dispersion. The average particle diameter is measured using a leaser diffraction type particle size distribution analyzer without subjecting the silica and the calcium compound to ultrasonic dispersion. The fine-particle silica is fine-particle spherical silica having an average sphericity of 95% or more, and the calcium compound is calcium hydroxide. Preferably, the sealing material should further contain a hardening time regulator. Preferably, the Material A and/Material B should be produced by a pulverizer using high-pressure water.

## Description

### BACKGROUND OF THE INVENTION

### FIELD OF THE INVENTION

The present invention relates generally to a sealing material and an injection method, and more particularly to a sealing material that has good permeability, capability of stopping water, and high durability even under high water pressures, and a process for producing that sealing material as well as an injection method for grounds.

### DESCRIPTION OF THE PRIOR ART

In recent years, there has been mounting demand for high-durability sealing materials that can permeate through fine crevices in bedrocks for the purposes of underground storage of LPG, underground containment of radioactive waste, stopping water in dams and tunnels, etc.

For sealing materials having high permeability, use has been made of a sealing material composed mainly of water glass, silica sol or active silica obtained by treatment of water glass through a cation exchange resin or an ion exchange membrane and a silica colloid sealing material wherein active silica is concentrated and granulated and then stabilized in a weak alkaline state of between pH 9 and 10, both being generally called a solution type sealing material (see Patent Publications 1 and 2).

Under high water pressures, however, those solution type sealing materials degrade in terms of durability, because they are forced out by the water pressure for reason of their low strength (called the homogel strength). With this in mind, fine-particle cement that is a suspension type sealing material has now been studied; however, it does not penetrate through fine crevices because its average particle diameter is as large as about 5 µm, still failing to provide sufficient effects on stopping water.

This is the reason why a sealing material composed primarily of fine-particle silica has been proposed in the art (see Patent Publication 3). Patent publication 3 teaches that a sealing material composed mainly of fine-particle silica is injected into grounds, but it says nothing about the use of a suspension containing a calcium compound.
Patent Publication 4 refers to silica, limes and dispersants, but there is no mention of containing dispersants in a silica-containing suspension and a lime-containing suspension.

Patent Publication 5 discloses an invention relating to "a process for producing a highly dispersed, low-viscosity ultrafine particle slurry, characterized in that a first, highly-dispersed, low-viscosity ultrafine particle slurry obtained by adding water and a dispersant to an ultrafine particle material in powder form to disintegrate and agitate the ultrafine particle material and further disintegrating and agitating the ultrafine particle material with the addition of a dispersant thereto is mixed with a second, highly dispersed, low-viscosity ultrafine particle slurry obtained by adding water and a dispersant to a powder form of ultrafine particle material different from the ultrafine particle material for the first, highly-dispersed, low-viscosity ultrafine particle slurry to disintegrate and agitate the ultrafine particle material and further disintegrating and agitating the ultrafine particle material with the addition of a dispersant thereto, and the resulting mixture is disintegrated and agitated, and further disintegrated and agitated with the addition of dispersant thereto" (Claim 3). That publication further teaches that "the ultrafine particle material is silica fume and/or hydrated lime" (Claim 6, and Paragraphs [0034] and [0068], silica lime (hydrated lime/silica fume=1) has a primary particle's average particle diameter of 0.10 µm as measured by a laser diffraction/scattering particle size analyzer (Paragraphs [0068] and [0072] and Table 1), and the permeability reaches 100% when the average agglomerated particle size is less than about 1 µm ([0070]).
A problem with the invention set forth in Patent Publication 5 is, however, that a complicated process involving repetitive application of the disintegration and agitation of the ultrafine particle material (silica fume and hydrated lime) and the addition of the dispersant, as described just above, is needed for reducing the particle size down to 1 µm or less. In addition, for the preparation of the highly dispersed, low-viscosity, ultrafine particle grout that is close to the primary particle, it is required to make use of a disintegration process in which the slurry is agitated using balls (beads) as media (Paragraph [0021]). With measurement using a laser diffraction/scattering particle size analyzer, ultrasonic dispersion is usually carried out as pretreatment, as prescribed in JIS R 1629; when the average particle size is measured with a laser diffraction/scattering particle size analyzer yet without making use of ultrasonic dispersion, it remains to be seen what the particle size will be. Neither does Patent Publication 5 say anything about other fine silica powders used as the ultrafine particle material than silica fume, nor is there any mention of durability or robustness of the highly dispersed, low-viscosity, ultrafine particle slurry in the case where it is used as a sealing material.

Patent Publications 6 and 7 disclose fine silica powders (fine, spherical silica) obtained by a process wherein a slurry having metallic silicon powders dispersed in water in a metallic silicon powder concentration of 20 to 70% or 5 to 60% is jetted into a flame at a jetting speed of at least 10 m/second or at least 20 m/second for burning and oxidization; however, they do not show that this fine, spherical silica is used as a sealing material.

Patent Publication 8 discloses inventions relating to "a sealing material application method wherein Material A containing a pozzolan substance and water beforehand and Material B containing a calcium-containing substance and water beforehand are separately applied" (Claim 1), and "a sealing material application method as recited in Claim 1 wherein Material A contains a dispersant beforehand" (Claim 2), and teaches that "a dispersant may be used in combination with Material B so as to enhance dispersibility" (Paragraph [0014]). However, there is not specific mention of the combined use of the dispersant with Material B containing a calcium-containing substance and water. In addition, a problem with the co-injection of Materials A and B is that the sealing material hardens immediately so much that it can no longer be injected (Paragraph [0022]). Patent Publication 8 also teaches that the "spherical silica obtained by fusing the raw material silica stone pulverized down to an average particle size of 1 µm or less in a high-temperature flame to form spheres" is used as the pozzolan substance; however, it does not show that the average particle size of spherical silica dispersed in Material A is 1 µm or less, nor does it say that the calcium-containing substance is pulverized down to 1 µm or less, and then dispersed.

Non-Patent Publication 1 discloses a grout (sealing) material comprising a mixture of Compound A containing ultrafine, spherical silica and water with Compound B containing ultrafine particle calcium hydroxide, a dispersant and water; however, it is silent about the incorporation of a dispersant in Compound A, and there is a problem in that an increased amount of ultrafine particle calcium hydroxide causes fluidity to go down, placing some limitation on the mixing ratio of Compounds A and B. Non-Patent Publication 1 also shows that the particle sizes of ultrafine particle, spherical silica and ultrafine particle calcium hydroxide are each generally 1 µm or less, but for measurement of particle size distributions, ultrasonic dispersion is usually carried out as pretreatment, as prescribed in JIS R 1629; when the particle size distribution is measured without making use of ultrasonic dispersion, it remains to be seen what the average particle size will be.

### Prior Arts

### Listing of the Patent Publications

Patent Publication 1: Patent No. 3205900
Patent Publication 2: JP(A) 2004-35584
Patent Publication 3: JP(A) 2007-217453
Patent Publication 4: International Publication No. 2005/123623
Patent Publication 5: JP(A) 8-41455
Patent Publication 6: JP(A) 2001-354409
Patent Publication 7: JP(A) 2002-20113
Patent Publication 8: JP(A) 2009-299291

### Listing of the Non-Patent Publication

Non-Patent Publication 1: the 64th Academic Lecture of Japan Society of Civil Engineer, the summary of the lecture (CD-ROM), pp. 145-146, August 3, 2009

### SUMMARY OF THE INVENTION

### OBJECT OF THE INVENTION

With such problems as mentioned above in mind, a primary object of the invention is to provide a sealing material that ensures high permeability, good water-stopping effects and durability, and an injection method.

### MEANS FOR ACHIEVING THE OBJECT

To achieve the aforesaid object, the present invention is embodied as follows.
(1) A sealing material that is a mixture of wet dispersed Material A and wet pulverized and dispersed Material B, said Material A containing fine-particle silica having an average particle diameter of 1.0 µm or less as measured using a laser diffraction type particle size distribution analyzer without subjecting said fine-particle silica to ultrasonic dispersion, a dispersant and water, and said Material B containing a calcium compound having an average particle diameter of 1.0 µm or less as measured using a laser diffraction type particle size distribution analyzer without subjecting said calcium compound to ultrasonic dispersion, a dispersant and water, characterized in that said fine-particle silica has been produced by a process in which a slurry having metallic silicon powders dispersed in water is jetted in a flame for burning and oxidization.
(2) A sealing material as recited in (1), wherein said Material A is a mixture of a dispersant with a wet dispersed suspension containing fine-particle silica having an average particle diameter of 1.0 µm or less as measured using a laser diffraction type particle size distribution analyzer without subjecting said fine-particle silica to ultrasonic dispersion and water.
(3) A sealing material as recited in (1), wherein said Material A is a mixture of a dispersant and water with a wet dispersed suspension containing fine-particle silica having an average particle diameter of 1.0 µm or less as measured using a laser diffraction type particle size distribution analyzer without subjecting said fine-particle silica to ultrasonic dispersion and water.
(4) A sealing material as recited in any one of (1) to (3), wherein said fine-particle silica is fine-particle spherical silica having an average sphericity of 95% or more.
(5) A sealing material as recited in any one of (1) to (4), wherein said Material B is a mixture in which water is further mixed with a wet pulverized and dispersed suspension containing a calcium compound having an average particle diameter of 1.0 µm or less as measured using a laser diffraction type particle size distribution analyzer without subjecting said calcium compound to ultrasonic dispersion, a dispersant and water.
(6) A sealing material as recited in any one of (1) to (5), wherein said calcium compound is calcium hydroxide.
(7) A sealing material as recited in any one of (1) to (6), wherein the dispersant in said Material A is used in an amount of 0.1 to 30 parts by mass (calculated as a solid matter) per 100 parts by mass of the fine-particle silica.
(8) A sealing material as recited in any one of (1) to (7), wherein the dispersant in said Material B is used in an amount of 1 to 30 parts by mass (calculated as a solid matter) per 100 parts by mass of the calcium compound.
(9) A sealing material as recited in any one of (1) to (8), which further contains a hardening time regulator.
(10) A process for producing a sealing material, characterized in that water is added to fine-particle silica produced by a process in which a slurry having metallic silicon powders dispersed in water is jetted into a flame for burning and oxidization, the resulting material is wet dispersed with a pulverizer using high-pressure water thereby obtaining a suspension containing fine-particle silica having an average particle diameter of 1.0 µm or less as measured using a laser diffraction type particle size distribution analyzer without subjecting said fine-particle silica to ultrasonic dispersion, and a dispersant and, if required, water are mixed with said suspension thereby producing Material A, whereas a dispersant and water are added to a calcium compound, the resulting material is wet pulverized and dispersed with a pulverizer using high-pressure water thereby obtaining a suspension containing a calcium compound having an average particle diameter of 1.0 µm or less as measured using a laser diffraction type particle size distribution analyzer without subjecting said calcium compound to ultrasonic dispersion, a dispersant and water, water is further mixed with said suspension, if required, thereby producing Material B, and finally said Materials A and B are mixed together.
(11) A process for producing a sealing material as recited in (10), wherein said fine-particle silica is fine particle spherical silica having an average sphericity of 95% or more.
(12) A process for producing a sealing material as recited in (10) or (11), wherein said calcium compound is calcium hydroxide.
(13) A process for producing a sealing material as recited in any one of (10) to (12), wherein a hardening time regulator is further mixed with said Material A.
(14) An injection method, in which wet dispersed Material A and wet pulverized and dispersed Material B are mixed together for injection, said Material A containing fine-particle silica having an average particle diameter of 1.0 µm or less as measured using a laser diffraction type particle size distribution analyzer without subjecting said fine-particle silica to ultrasonic dispersion, a dispersant and water, and said Material B containing a calcium compound having an average particle diameter of 1.0 µm or less as measured using a laser diffraction type particle size distribution analyzer without subjecting said calcium compound to ultrasonic dispersion, a dispersant and water, characterized in that said fine-particle silica has been produced by a process in which a slurry having metallic silicon powders dispersed in water is jetted into a flame for burning and oxidization.
(15) An injection method as recited in (14), wherein said Material A is a mixture of a dispersant with a wet dispersed suspension containing fine-particle silica having an average particle diameter of 1.0 µm or less as measured using a laser diffraction type particle size distribution analyzer without subjecting said fine-particle silica to ultrasonic dispersion, and water.
(16) An injection method as recited in (14), wherein said Material A is a mixture of a dispersant and water with a wet dispersed suspension containing fine-particle silica having an average particle diameter of 1.0 µm or less as measured using a laser diffraction type particle size distribution analyzer without subjecting said fine-particle silica to ultrasonic dispersion, and water.
(17) An injection method as recited in any one of (14) to (16), wherein said fine-particle silica is fine-particle spherical silica having an average sphericity of 95% or more.
(18) An injection method as recited in any one of (14) to (17), wherein said material B is a mixture of additional water with a wet pulverized and dispersed suspension containing a calcium compound having an average particle diameter of 1.0 µm or less as measured using a laser diffraction type particle size distribution analyzer without subjecting said calcium compound to ultrasonic dispersion, a dispersant and water.
(19) An injection method as recited in any one of (14) to (18), wherein said calcium compound is calcium hydroxide.
(20) An injection method as recited in any one of (14) to (19), wherein the dispersant in said Material A is used in an amount of 0.1 to 30 parts by mass (calculated as a solid matter) per 100 parts by mass of the fine-particle silica.
(21) An injection method as recited in any one of (14) to (20), wherein the dispersant in said Material B is used in an amount of 1 to 30 parts by mass (calculated as a solid matter) per 100 parts by mass of the calcium compound.
(22) An injection method as recited in any one of (14) to (21), in which a hardening time regulator is further contained.
(23) An injection method as recited in any one of (14) to (22), wherein said Material A and said Material B are mixed together by any one of a one-shot method, a 1.5-shot method and a two-shot method, and then injected into a ground or the like.

### ADVANTAGES OF THE INVENTION

The present invention successfully provides a sealing material and injection method that makes sure high permeability through grounds having crevices as well as good water-stopping effects and durability.

### MODE FOR CARRYING OUT THE INVENTION

In what follows, some specific embodiments of the invention will be explained.
It is to be noted that unless otherwise stated, the "parts" and "%" used herein are given on a mass basis.

For the fine-particle silica used herein, there is fine-particle spherical silica used that has been produced by a process in which a slurry having metallic silicon powders dispersed in water is jetted into a flame for burning and oxidization. This fine-particle spherical silica is preferred because of its less coagulation (structure) yet its high permeability.

While the fine-particle silica used herein may have an average particle diameter of 1.0 µm or less for the purpose of improving permeability and compressive strength characteristics, it is to be understood that preference is given to an average particle diameter of 0.05 to 1.0 µm, and more particularly 0.05 to 0.6 µm. For instance, slurry having metallic silicon powders dispersed in water in a concentration of 5 to 70% is jetted into a high-temperature flame formed by combustible gas and auxiliary gas at a jetting speed of at least 10 m/second for fusion and sphering thereby producing spherical silica powders. If they are further classified, it is then possible to collect fine-particle spherical silica powders having an average particle diameter that contributes a lot more to fluidity. Typically, such silica powders may be produced by the processes set forth in Patent Publications 6 and 7.

Such fine-particle silica should have an average sphericity of preferably 90% or more, more preferably 95% or more, and even more preferably 97% or more in terms of permeability and compressive strength characteristics.

The sphericity may be measured using a scan electron microscope ("JSM-T200 Model" made by JEOL Ltd.) and an image analyzer (made by Nippon Avionics Co., Ltd.). Typically, a projection area (A) and peripheral length (PM) of particle are first figured out of an SEM photograph of powders. Suppose here that (B) defines the area of a true circle corresponding to the peripheral length (PM). The sphericity of that particle will be able to be represented as A/B × 100 (%). Therefore, given a true circle having the same peripheral length as the peripheral length (PM) of the sample particle, PM=2πr and B= π r²: B=π × (PM/2π)². The sphericity of individual particles may be figured as Sphericity=A/B×100(%)=A×4π /(PM)²×100 (%); that is, an average value of 200 arbitrary particles may be figured out as the sphericity of powders.

In addition, the fine-particle silica should have a noncrystalinity of preferably 95% or more, more preferably 98% or more, and even more preferably 100%.

The noncrystalinity may be measured by using a powder X-ray diffractometry system (for instance, "MiniFlex" made by RIGAKU Co., Ltd.), and carrying out X-ray diffraction analysis of a sample in a range where the 2θ of CuKα radiation is between 26° and 27.5° to determine the intensity rate of a specific diffraction peak. Such fine-particle silica, for instance, is available from Denki Kagaku Kogyo Kabushiki Kaisha in the trade names of "SFP-20M" and "SFP-30M", and from Admatechs Co., Ltd. in the trade name of "Adamafine".

The calcium compound used herein includes inorganic substances such as calcium hydroxide, calcium chloride and gypsum, calcium salts of organic acids such as calcium formate, among which calcium hydroxide is preferred in terms of compressive strength.

To improve permeability and compressive strength characteristics, the calcium compound used herein should be ground or pulverized down to an average particle diameter of 1.0 µm or less, preferably 0.05 to 1.0 µm, and more preferably 0.05 to 0.5 µm.

In the invention, the fine-particle silica and the calcium compound are each dispersed in water thereby preparing Material A and Material B.

The concentration of the fine-particle silica in Material A of the invention should be preferably 80% or less, more preferably 5 to 60%, and most preferably 10 to 40%. As the concentration of the fine-particle silica is greater than 80%, it may often make viscosity high, letting permeability go down. In the invention, it is also possible to produce slurry having high fine-particle silica concentrations beforehand, and dilute it with water for in-situ use. Where the sealing material of the invention is unlikely to penetrate through grounds in high fine-particle silica concentrations, it is preferable to continue injection work over an extended period of time in concentrations of as low as 5% or less, thereby ensuring injection of the sealing material through small crevices, leading to a lot more enhanced improvements.

The amount of the calcium compound in Material B of the invention should be preferably 20 to 250 parts, and more preferably 50 to 200 parts per 100 parts of the fine-particle silica. As the amount of the calcium compound is less than 20 parts, compressive strength may often go down, and as that is greater than 250 parts, permeability may often go down.

The concentration of the calcium compound in Material B of the invention should be preferably 50% or less, more preferably 2 to 40%, and most preferably 5 to 30%. As the concentration of the calcium compound is greater than 50%, it may often cause viscosity to grow high enough to let permeability go down. In the invention, it is also possible to produce slurry having high calcium compound concentrations beforehand, and dilute it with water for in-situ use. Where the sealing material of the invention is unlikely to penetrate through grounds in high calcium compound concentrations, it is preferable to continue injection work over an extended period of time in concentrations of as low as 2% or less, making sure injection of the sealing material through small crevices, resulting in a lot more enhanced improvements.

In the invention, Materials A and B must each be used in combination with the dispersant. It is not preferable to add the dispersant to Material A or B alone, because the moment Materials A and B are mixed together, they react and solidify. Although depending on what conditions injection takes place in, however, it may be possible to reduce the amount of the dispersant used as much as possible, so that the gelling time can be cut short or instantaneous gelling is allowed for prevention of leakages, and for limited injection.

The dispersant used herein may be those based on naphthalene sulfonates, lignin sufonates, melamine sufonates, polycarboxylates, and polyethers, among which the naphthalene sulfonate and/or polycarboxylate dispersants are preferred in terms of permeability and compressive strength characteristics.

The amount of the dispersant used in Material A should be preferably 0.1 to 30 parts (calculated as a solid matter), and more preferably 5 to 20 parts (calculated as a solid matter) per 100 parts of the fine-particle silica in Material A. At less than 0.1 part, the moment both parts are mixed together, they react and solidify, often making permeability through grounds worse, and as the dispersant is used in an amount of greater than 30 parts, it may often cause compressive strength to become low.
The fine-particle silica produced by the process in which the slurry having metallic silicon powders dispersed in water is jetted into a flame for burning and oxidization may later be provided with the dispersant, because it has so good dispersibility that it can be dispersed in water without adding the dispersant to it at the outset. The concentration of silanol groups would appear to correlate with that dispersibility in water.

The amount of the dispersant used in Material B should be preferably 0.1 to 30 parts (calculated as a solid matter), and more preferably 5 to 20 parts (calculated as a solid matter) per 100 parts of the calcium compound. At less than 0.1 part, the moment both parts are mixed together, they react and solidify, often making permeability through grounds worse, and as the dispersant is used in an amount of greater than 30 parts, it may often cause compressive strength to go down.

The sealing material of the invention may contain the hardening time regulator to regulate the hardening time. By way of example but not exclusively, the hardening time regulator includes one or two or more selected from inorganic acids such as alkaline metal sulfates, alkaline metal carbonates, alkaline metal bicarbonates, alkaline metal phosphates, organic acids such as gluconic acid, tartaric acid, citric acid, malic acid, lactic acid and salts of those organic acids, among which the alkaline metal sulfates and/or alkaline metal carbonates are preferred, although the alkaline metal sulfates are more preferred, in terms of compressive strength. The alkaline metal sulfates, for instance, include sodium sulfate and potassium sulfate.

The amount of the hardening time regulator used should be preferably 30 parts or less, more preferably 0.1 to 30 parts, and most preferably 1 to 10 parts per 100 parts of the fine-particle silica in Material A. As the amount of the hardening-time regulator is greater than 30 parts, it may often cause permeability to go down.

Materials A and B should be mixed together at a mixing rate of preferably 5:1 to 1:5, and more preferably 2:1 to 1:2.

To improve permeability, the fine-particle silica and the calcium compound should preferably be dispersed or pulverized down to more reduced average particle diameters using a variety of wet pulverizers. Note here that the "average particle diameter" referred to herein means a value for a wet dispersed suspension as measured in a water medium without being subjected to ultrasonic dispersion that must usually be carried out as pretreatment, using a laser diffraction type particle size distribution analyzer (for instance, "LA-920 Model" made by Horiba Ltd.). What meets the JIS R 1629 requirement is often poor in practical permeability through grounds, because its particle size is measured after ultrasonic dispersion of agglomerate. If the particle size is measured with no ultrasonic dispersion, then the results get approximate to practical permeability through grounds. Where the average particle diameter of the fine-particle silica and calcium compound as measured without being subjected to ultrasonic dispersion is 1.0 µm or less, there is permeability improved. The wet dispersed suspension is understood to refer to Material A in which the fine-particle silica is wet dispersed, and Material B alike in which the calcium compound is wet pulverized and dispersed (called the "wet pulverized and dispersion" herein).

The wet pulverizer used herein may include a high-speed agitator, a media agitating mill, and a pulverizer using high-pressure water, which are selectively used alone or in combination, although the pulverizer using high-pressure water is preferred because its pulverizing efficiency is high.

The high-speed agitator should preferably have a structure not only allowing a rotor to rotate simply at high speed but also permitting so-called turbulence to exert shearing force on particles. Analogous to this is, for instance, "Sharp Flow Mill" available from Pacific Machinery & Engineering Co., Ltd., and "Homomixer", "Homomic Line Mill", and "Homodisper", all available from Tokushukika Co., Ltd. The media agitating mill is available from Nara Machinery Co., Ltd. in the trade name of "Mycross", Ashizawa Fine Tech Co., Ltd. in the trade name of "Star Mill", Mitsui Mining Ltd. in the trade name of "SC-Mill", Kotobuki Industries Co., Ltd. in the trade name of Dual Apex Mill", and so on. The pulverizer using high-pressure water is designed such that a high pressure of as high as 50 to 400 MPa is applied to slurry to bifurcate it into two branches that are then oppositely collided in a portion where they merge together for pulverization. For instance, such a pulverizer is available from Sugino Machine Limited in the trade name of "Star Burst" and "Ultimizer", Nanomizer Inc. in the trade name of "Nanomizer", and Microflui Disk Co., Ltd. in the trade name of "Microfluitizer". Among others, "Star Burst" is preferred because it improves the permeability of the sealing material through grounds.

In injecting the sealing material of the invention into grounds, Materials A and B are mixed together by any of the so-called two-shot process in which Materials A and B merge and mix together at an end of a double-pipe for injection, the so-called 1.5 shot process in which both Materials A and B, in fluid form, merge and mix together on their way from an injection pump to an injection pipe for injection, and the so-called one-shot process in which, after Material A or B is blended in a blending tank such as a mixer, the other part is added to and mixed with the blend into a one-part fluid material for injection.

The injection method of the invention is characterized in that the aforesaid sealing material is injected into a ground. Typically, the inventive injection method is used for the purpose of stopping water through a bedrock having crevices under high water-penetration pressures, and stopping water around caves or cavities created by excavation of bedrocks, ensuring that those crevices are better impregnated with the sealing material, and the effects on stopping water are maintained over an extended period of time while the sealing material is prevented from being forced out even under high water-penetration pressures, thereby obtaining such effects as described above.

While the reason why good permeability is achieved by use of the dispersant for both Materials A and B has yet to be clarified, it would appear to be due to the reaction of the dispersant with the surfaces of the fine-particle silica and calcium compound, whereby hardening is delayed such that there will be no intermediate hydration taking place upon contact of the fine-particle silica with the calcium compound.

In what follows, the invention will be explained with reference to the following non-restrictive examples.

### EXAMPLES

Unless otherwise stated, the following examples were carried out at 20°C.

### (Example 1)

One hundred (100) parts of fine-particle silica differing in particle diameter and type, 10 parts of dispersant and 500 parts of water were mixed together, and the mixture was wet dispersed with "Star Burst" made by Sugino Machine Limited to prepare Material A (S1 to S7).
On the other hand, 100 parts of commercially available calcium hydroxide (having an average particle diameter of 9.5 µm), 10 parts of dispersant and 500 parts of water were mixed together, and the mixture was wet dispersed again with "Star Burst" made by Sugino Machine Limited for varying pulverizing times to prepare Material B (C1 to C6).
Materials A and B were allowed to merge together. Material A and B were mixed together such that the amount of the calcium compound used was 100 parts per 100 parts of the fine-particle silica.
Permeability testing, and compressive strength testing was performed. The compositions of Materials A and B as well as the results of testing are tabulated in the form of Table 1.
The fine-particle silica was prepared by jetting a slurry having metallic silicon powders dispersed in water in a concentration of 30% into a flame at a jetting speed of 2 to 150 m/second in which it was burned and oxidized into spherical melts.

### (Materials Used)

### Fine-Particle Silica S1

A slurry, in which metallic silicon powders having an average particle diameter of 0.05 µm, a sphericity of 97% and a noncrystalinity of 100% after wet dispersion were dispersed in water in a concentration of 30%, was jetted into a flame at a jetting speed of 150 m/second or more for burning and oxidization, thereby preparing fine-particle silica S1.

### Fine-Particle Silica S2

A slurry, in which metallic silicon powders having an average particle diameter of 0.1 µm, a sphericity of 97% and a noncrystalinity of 100% after wet dispersion were dispersed in water in a concentration of 30%, was jetted into a flame at a jetting speed of 120 m/second or more for burning and oxidization, thereby preparing fine-particle silica S2.

### Fine-Particle Silica S3

A slurry, in which metallic silicon powders having an average particle diameter of 0.6 µm, a sphericity of 97% and a noncrystalinity of 100% after wet dispersion were dispersed in water in a concentration of 30%, was jetted into a flame at a jetting speed of 100 m/second or more for burning and oxidization, thereby preparing fine-particle silica S3.

### Fine-Particle Silica S4

A slurry, in which metallic silicon powders having an average particle diameter of 1.0 µm, a sphericity of 96% and a noncrystalinity of 100% after wet dispersion were dispersed in water at a concentration of 30%, was jetted into a flame at a jetting speed of 50 m/second or more for burning and oxidization, thereby preparing fine-particle silica S4.

### Fine-Particle Silica S5

A slurry, in which metallic silicon powders having an average particle diameter of 3.5 µm, a sphericity of 95% and a noncrystalinity of 100% after wet dispersion were dispersed in water in a concentration of 30%, was jetted into a flame at a jetting speed of 2 m/second or more for burning and oxidization, thereby preparing fine-particle silica S5.

### Silica Fume S6 By-Produced with Ferrosilicon

S6 had an average particle diameter of 20 µm after wet dispersion and a sphericity of 86% (for reference, the average particle diameter after ultrasonic dispersion was 5.5 µm).

### Silica S7 Synthesized by the Sol-Gel Method

S7 had an average particle diameter of 10.1 µm after wet dispersion and a sphericity of 75% (for reference, the average particle diameter after ultrasonic dispersion was 9.8 µm).

### Calcium Compound C1

C1 was calcium hydroxide having an average particle diameter of 0.05 µm after wet pulverization and dispersion.

### Calcium Compound C2

C2 was calcium hydroxide having an average particle diameter of 0.1 µm after wet crushing and dispersion.

### Calcium Compound C3

C3 was calcium hydroxide having an average particle diameter of 0.5 µm after wet pulverization and dispersion.

### Calcium Compound C4

C4 was calcium hydroxide having an average particle diameter of 1.0 µm after wet pulverization and dispersion.

### Calcium Compound C5

C5 was calcium hydroxide having an average particle diameter of 3.5 µm after wet pulverization and dispersion (for reference, the average particle diameter after ultrasonic dispersion was 2.1 µm).

### Calcium Compound C6

C6 was anhydrous calcium sulfate having an average particle diameter of 0.5 µm after wet pulverization and dispersion.

### Dispersant α

Dispersant α was a commercially available, liquid naphthalene sulfonate-based dispersant having a solid matter concentration of 40%.

### Dispersant β

Dispersant β was a commercially available, liquid polycarboxylate-based dispersant having a solid matter concentration of 40%.

### (Estimation Methods)

### Average Particle Diameter

The average particle diameter was measured using a laser diffraction type particle size distribution analyzer ("LA-920 Model" made by Horiba Ltd.).
Materials A and B were measured in a water medium without being subjected to ultrasonic dispersion.

### Permeability Testing

An injection system according to the Japanese Geotechnical Society Standard JGS0831 was used to fill No. 8 silica sand up in a sample tank of 5 cm in diameter and 20 cm in length, with the permeation length defined as a penetration length of the sealing material 30 minutes after the initiation of injecction.

### Compressive Strength

A hardened lump was removed from the sample tank where the permeability testing was performed, and cut to a length of 100 mm for measurement at material ages of 7 days and 28 days using an Amsler type compression testing machine. A hardened sample having a penetration length of 100 mm or less was flatly finished at its top and bottom.

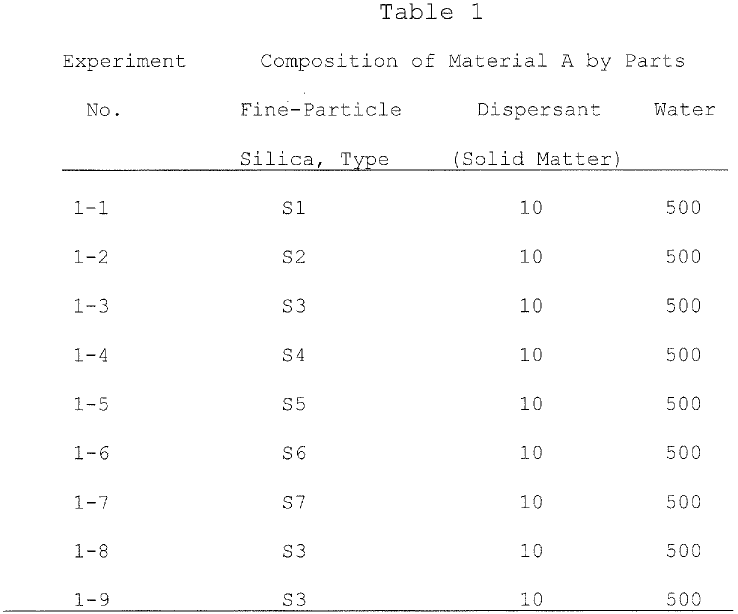

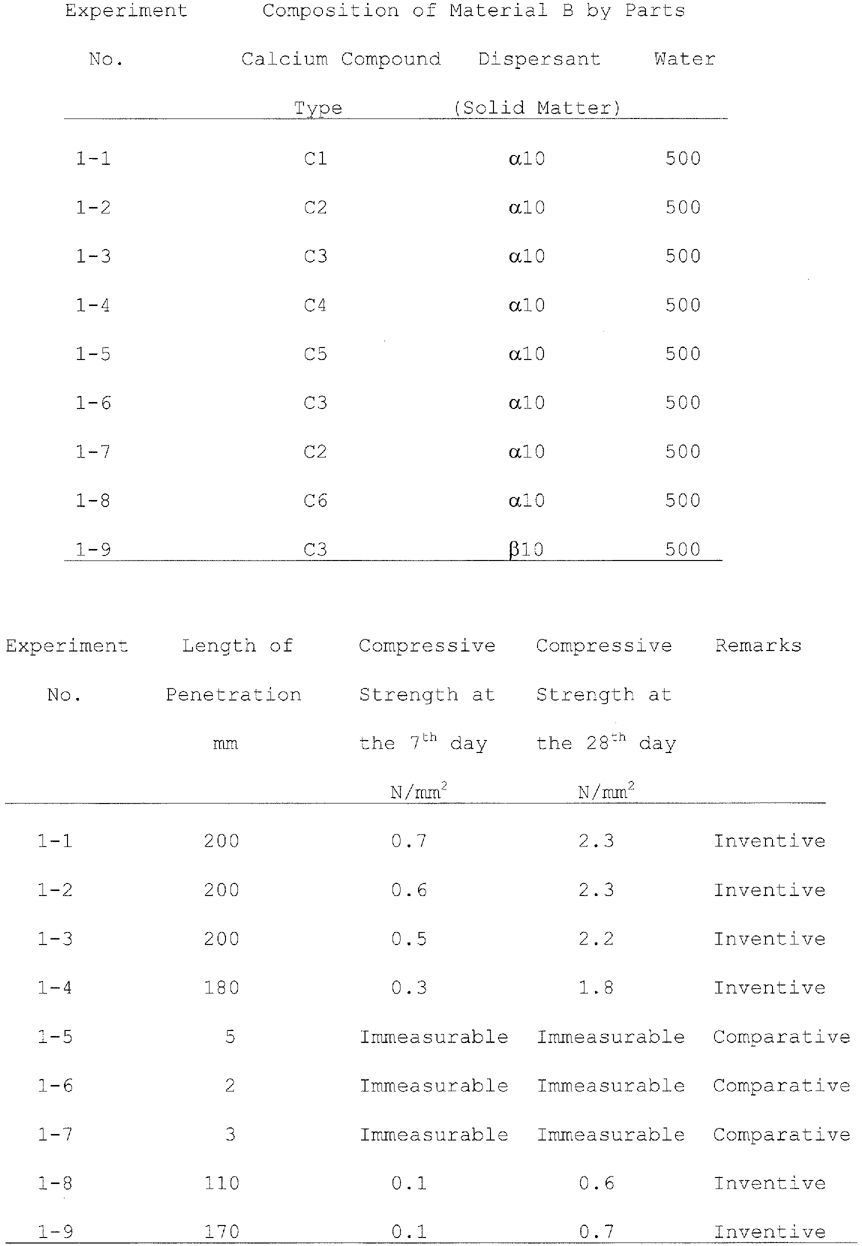

The amount of the dispersant in Material A is given per 100 parts of the fine-particle silica.
The amount of water in Material A is given per 100 parts of the fine-particle silica.
The amount of the dispersant in Material B is given per 100 parts of the calcium compound.
The amount of water in Material B is given per 100 parts of the calcium compound.

It is seen from Table 1 that the higher and smaller the sphericity and average particle size of the fine-particle silica or the smaller the average particle size of the calcium compound, the better the permeability and compressive strength characteristics get. It is also seen that the fine-particle silica and calcium compound of the invention make sure good permeability and compressive strength characteristics even with no application of ultrasonic dispersion thereto. It is further seen that the silica fume having an average particle size of 20 µm and by-produced with ferrosilicon is inferior in terms of permeability and compressive strength characteristics.

### (Example 2)

Permeability testing, and compressive strength testing was carried out as in Example 1 with the exception that wet pulverized S3 and C3 were used, and Materials A and B were mixed together using the calcium compound in such amounts as shown in Table 2 per 100 parts of the fine-particle silica. The compositions and the results are set out in Table 2.

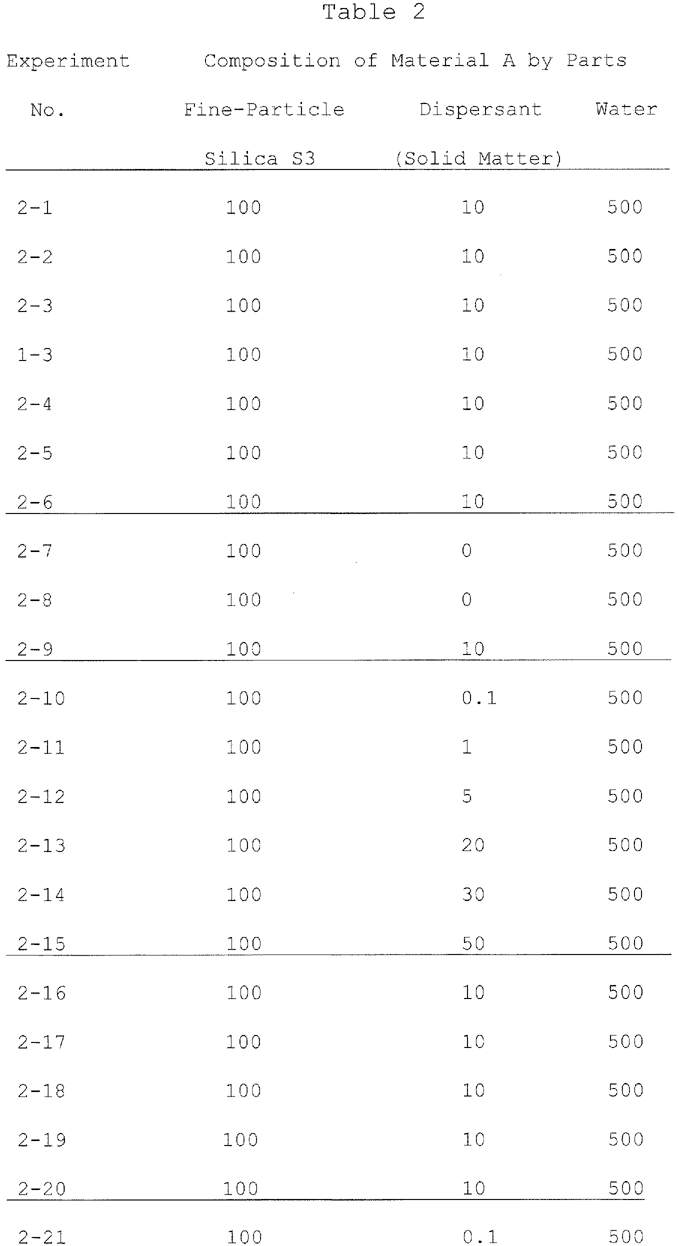

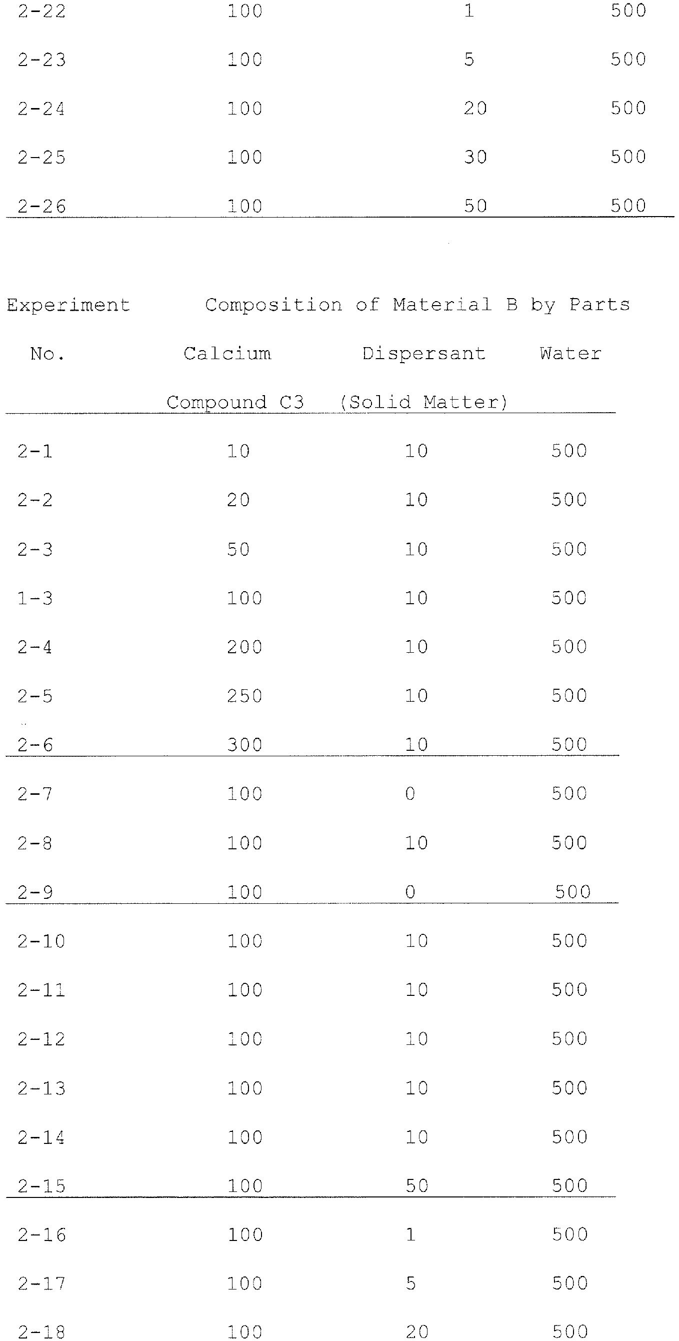

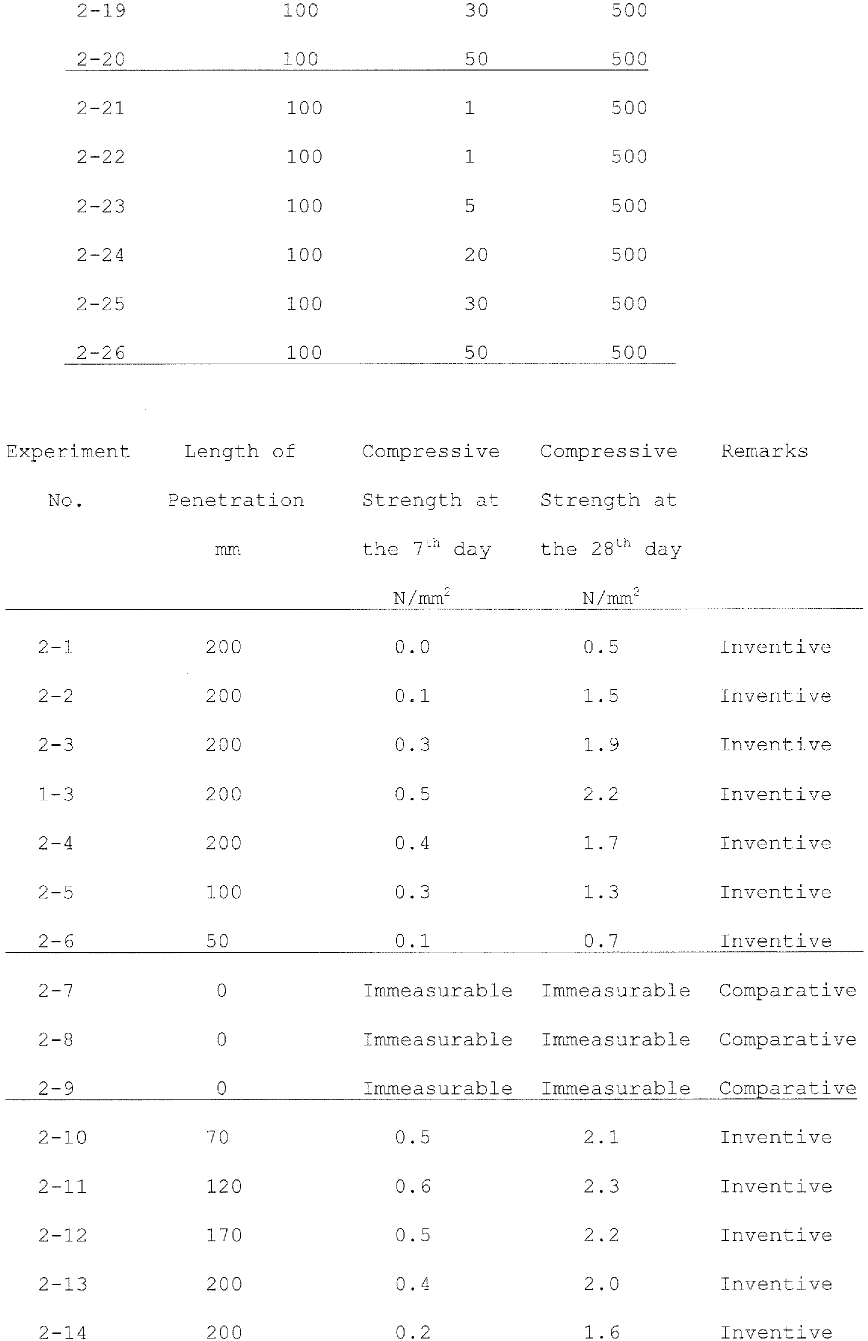

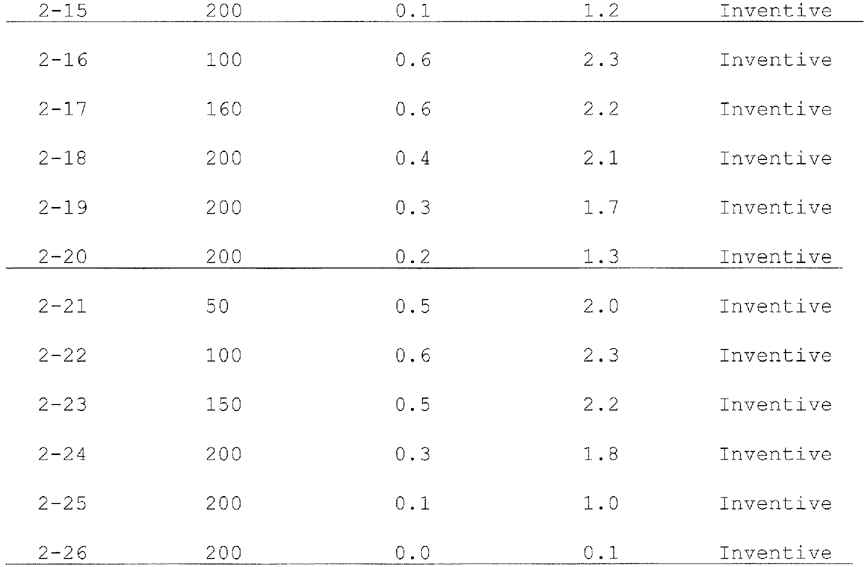

The amount of the dispersant in Material A is given per 100 parts of the fine-particle silica.
The amount of water in Material A is given per 100 parts of the fine-particle silica.
The amount of the calcium compound in Material B is given per 100 parts of the fine-particle silica.
The amount of the dispersant in Material B is given per 100 parts of the calcium compound.
The amount of water in Material B is given per 100 parts of the calcium compound.

It is seen from Table 2 that good permeability and compressive strength characteristics are achievable by using the dispersant for Materials A and B alike, and optimizing the amounts of the calcium compound and dispersant.

### (Example 3)

Permeability testing, and compressive strength testing was carried out as in Example 2 with the exception that the hardening time regulator was used in such amounts as shown in Table 3 per 100 parts of the fine-particle silica, and Materials A and B were mixed together using the calcium compound in such amounts as shown in Table 3 per 100 parts of the fine-particle silica. Note here that citric acid that was an acidic hardening time regulator was incorporated in Material A because of its risk of reacting with calcium hydroxide, and other hardening time regulators were done in Material B.

### Materials Used

Hardening time regulator T1: sodium sulfate
Hardening time regulator T2: potassium sulfate
Hardening time regulator T3: sodium carbonate
Hardening time regulator T4: citric acid

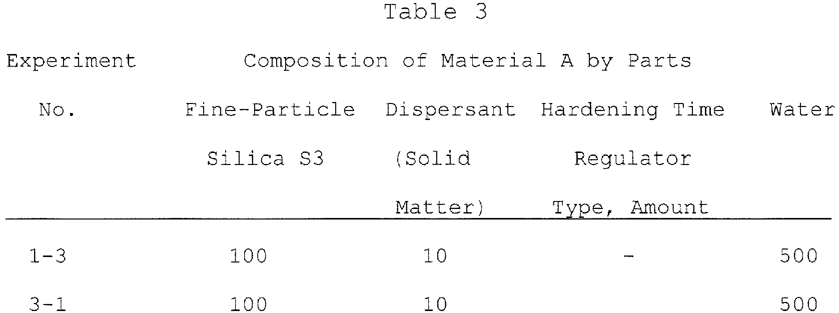

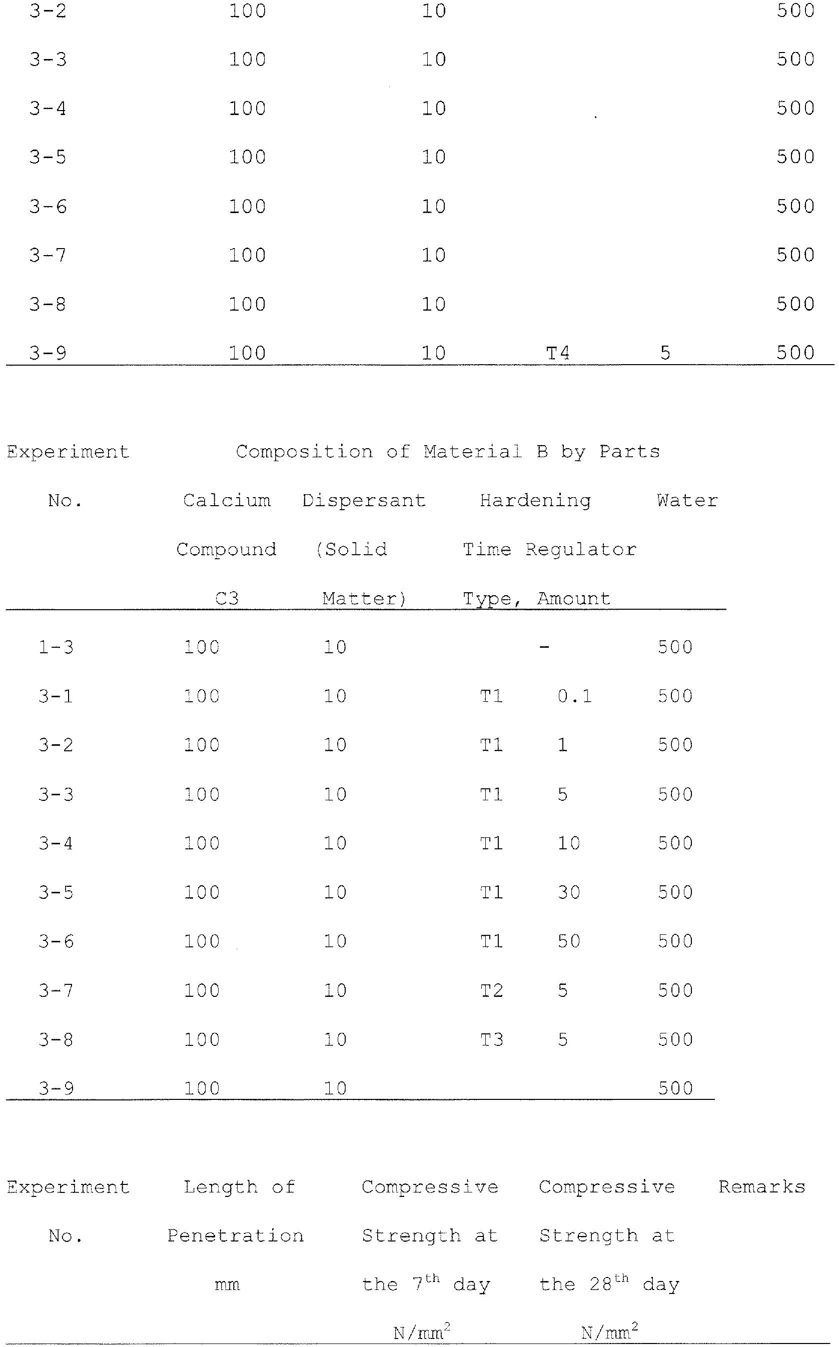

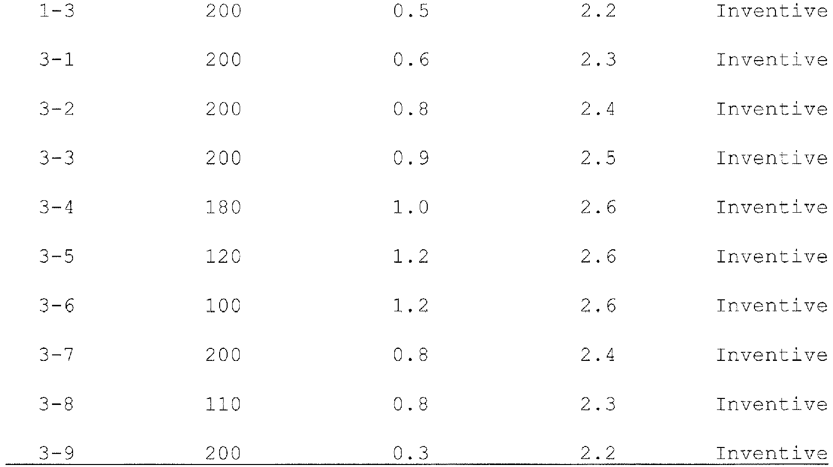

The amount of the dispersant in Material A is given per 100 parts of the fine-particle silica.
The amount of water in Material A is given per 100 parts of the fine-particle silica.
The amount of the calcium compound in Material B is given per 100 parts of the fine-particle silica.
The amount of the dispersant in Material B is given per 100 parts of the calcium compound.
The amount of the hardening time regulator in Materials A and B is given per 100 parts of the fine-particle silica.
The amount of water in Material B is given per 100 parts of the calcium compound.

It is seen from Table 3 that good permeability and compressive strength characteristics are achievable by optimizing the types and amounts of the hardening time regulators.

### (Example 4)

One hundred (100) parts of fine-particle silica S3 were mixed with 500 parts of water, and the mixture was wet dispersed by means of a wet disperser available from Sugino Machine Limited in the trade name of "Star Burst" to prepare a fine-particle silica slurry, which was then mixed with the dispersant in an amount of 10 parts per 100 parts of the fine-particle silica to prepare Material A.
Apart from this, C3 in Example 1 was used for Material B, and Materials A and B were mixed together such that the amount of the calcium compound used was 100 parts per 100 parts of the fine-particle silica.
Permeability testing, and compressive strength testing was performed. The compositions and the results are set out in Table 4.

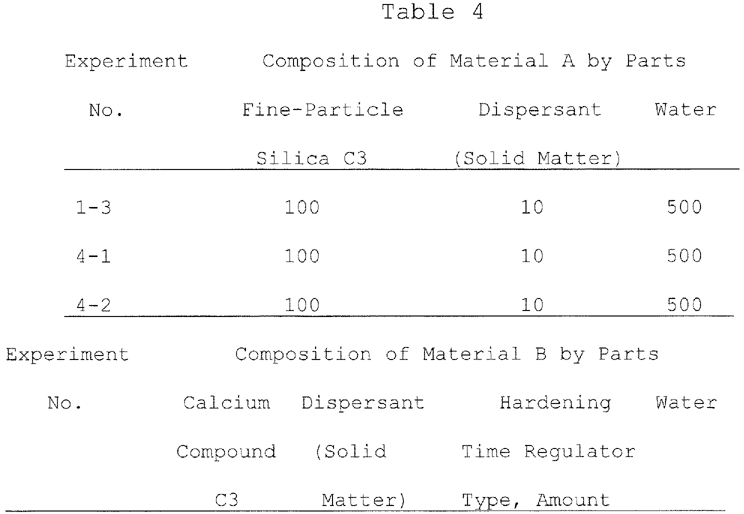

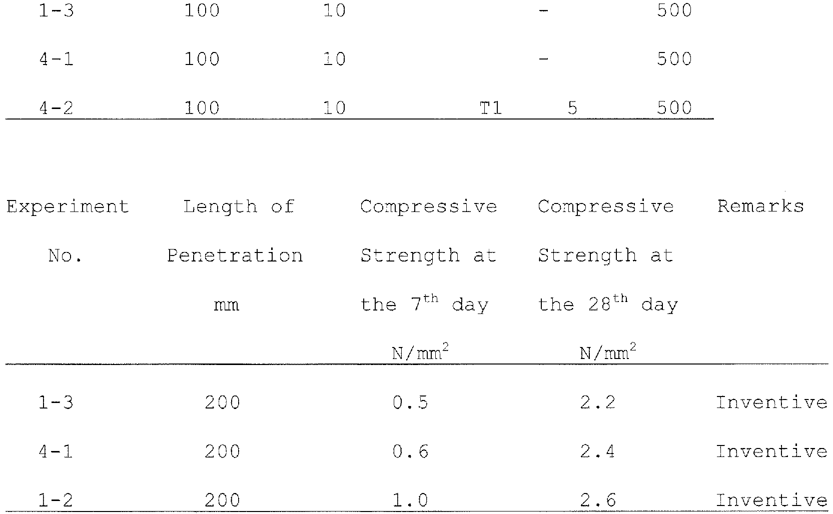

The amount of the dispersant in Material A is given per 100 parts of the fine-particle silica.
The amount of water in Material A is given per 100 parts of the fine-particle silica.
The amount of the calcium compound in Material B is given per 100 parts of the fine-particle silica.
The amount of the dispersant in Material B is given per 100 parts of the calcium compound.
The amount of the hardening time regulator in Material B is given per 100 parts of the fine-particle silica.
The amount of water in Material B is given per 100 parts of the calcium compound.

It has been ascertained that the fine-particle silica produced by the process wherein a slurry having metallic silicon powders dispersed in water is jetted into a flame for burning and oxidization can be dispersed in water without the addition of a dispersant at the outset, and that when the dispersant is later added, too, like Experiment No. 4-1, the permeability and compressive strength were much the same as in Experiment No. 1-3 where the dispersant was added from the outset.

### AVAILABILITY TO THE INDUSTRY

The sealing material of the invention is capable of permeating through fine crevices in bedrocks, and has long-term durability and improved permeability and compressive strength characteristics. For instance, the inventive sealing material may find applications not only for improvements in a variety of grounds and mountains but also for underground storage of LPG, underground containment of radioactive waste, and water stopping in dams and tunnels, etc.

The fine-particle silica and calcium compound according to the invention is of great economical benefit because it makes sure good permeability and compressive strength characteristics without undergoing ultrasonic dispersion.

## Claims

1. A sealing material, **characterized by** being a mixture of wet dispersed Material A and wet pulverized and dispersed Material B, said Material A containing fine-particle silica having an average particle diameter of 1.0 µm or less as measured using a laser diffraction type particle size distribution analyzer without subjecting said fine-particle silica to ultrasonic dispersion, a dispersant and water, and said Material B containing a calcium compound having an average particle diameter of 1.0 µm or less as measured using a laser diffraction type particle size distribution analyzer without subjecting said calcium compound to ultrasonic dispersion, a dispersant and water, wherein said fine-particle silica has been produced by a process in which a slurry having metallic silicon powders dispersed in water is jetted in a flame for burning and oxidization.

2. A sealing material as recited in claim 1, wherein said Material A is a mixture of a dispersant with a wet dispersed suspension containing fine-particle silica having an average particle diameter of 1.0 µm or less as measured using a laser diffraction type particle size distribution analyzer without subjecting said fine-particle silica to ultrasonic dispersion, and water.

3. A sealing material as recited in claim 1, wherein said Material A is a mixture of a dispersant and water with a wet dispersed suspension containing fine-particle silica having an average particle diameter of 1.0 µm or less as measured using a laser diffraction type particle size distribution analyzer without subjecting said fine-particle silica to ultrasonic dispersion and water.

4. A sealing material as recited in claim 1, wherein said fine-particle silica is fine-particle spherical silica having an average sphericity of 95% or more.

5. A sealing material as recited in claim 1, wherein said Material B is a mixture in which water is further mixed with a wet pulverized and dispersed suspension containing a calcium compound having an average particle diameter of 1.0 µm or less as measured using a laser diffraction type particle size distribution analyzer without subjecting said calcium compound to ultrasonic dispersion, a dispersant and water.

6. A sealing material as recited in claim 1, wherein said calcium compound is calcium hydroxide.

7. A sealing material as recited in claim 1, wherein the dispersant in said Material A is used in an amount of 0.1 to 30 parts by mass (calculated as a solid matter) per 100 parts by mass of the fine-particle silica.

8. A sealing material as recited in claim 1, wherein the dispersant in said Material B is used in an amount of 1 to 30 parts by mass (calculated as a solid matter) per 100 parts by mass of the calcium compound.

9. A sealing material as recited in any one of claims 1 to 8, which further contains a hardening time regulator.

10. A process for producing a sealing material, **characterized in that** water is added to fine-particle silica produced by a process in which a slurry having metallic silicon powders dispersed in water is jetted into a flame for burning and oxidization, the resulting material is wet dispersed with a pulverizer using high-pressure water thereby obtaining a suspension containing fine-particle silica having an average particle diameter of 1.0 µm or less as measured using a laser diffraction type particle size distribution analyzer without subjecting said fine-particle silica to ultrasonic dispersion, and a dispersant and, if required, water are mixed with said suspension thereby producing Material A, whereas a dispersant and water are added to a calcium compound, the resulting material is wet pulverized and dispersed with a pulverizer using high-pressure water thereby obtaining a suspension containing a calcium compound having an average particle diameter of 1.0 µm or less as measured using a laser diffraction type particle size distribution analyzer without subjecting said calcium compound to ultrasonic dispersion, a dispersant and water, and water is mixed with said suspension, if required, thereby producing Material B, and finally said Materials A and B are mixed together.

11. A process for producing a sealing material as recited in claim 10, wherein said fine-particle silica is fine particle spherical silica having an average sphericity of 95% or more.

12. A process for producing a sealing material as recited in claim 10, wherein said calcium compound is calcium hydroxide.

13. A process for producing a sealing material as recited in any one of claims 10, 11 and 12, wherein a hardening time regulator is further mixed with said Material A.

14. An injection method, in which wet dispersed Material A and wet pulverized and dispersed Material B are mixed together for injection, said Material A containing fine-particle silica having an average particle diameter of 1.0 µm or less as measured using a laser diffraction type particle size distribution analyzer without subjecting said fine-particle silica to ultrasonic dispersion, a dispersant and water, and said Material B containing a calcium compound having an average particle diameter of 1.0 µm or less as measured using a laser diffraction type particle size distribution analyzer without subjecting said calcium compound to ultrasonic dispersion, a dispersant and water, **characterized in that** said fine-particle silica has been produced by a process in which a slurry having metallic silicon powders dispersed in water is jetted into a flame for burning and oxidization.

15. An injection method as recited in claim 14, wherein said Material A is a mixture of a dispersant with a wet dispersed suspension containing fine-particle silica having an average particle diameter of 1.0 µm or less as measured using a laser diffraction type particle size distribution analyzer without subjecting said fine-particle silica to ultrasonic dispersion, and water.

16. An injection method as recited in claim 14, wherein said Material A is a mixture of a dispersant and water with a wet dispersed suspension containing fine-particle silica having an average particle diameter of 1.0 µm or less as measured using a laser diffraction type particle size distribution analyzer without subjecting said fine-particle silica to ultrasonic dispersion, and water.

17. An injection method as recited in any one of claim 14 to 16, wherein said fine-particle silica is fine-particle spherical silica having an average sphericity of 95% or more.

18. An injection method as recited in claim 14, wherein said material B is a mixture of additional water with a wet pulverized and dispersed suspension containing a calcium compound having an average particle diameter of 1.0 µm or less as measured using a laser diffraction type particle size distribution analyzer without subjecting said calcium compound to ultrasonic dispersion, a dispersant and water.

19. An injection method as recited in claim 14, wherein said calcium compound is calcium hydroxide.

20. An injection method as recited in claim 14, wherein the dispersant in said Material A is used in an amount of 0.1 to 30 parts by mass (calculated as a solid matter) per 100 parts by mass of the fine-particle silica.

21. An injection method as recited in claim 14, wherein the dispersant in said Material B is used in an amount of 1 to 30 parts by mass (calculated as a solid matter) per 100 parts by mass of the calcium compound.

22. An injection method as recited in any one of claims 14 to 21, in which a hardening time regulator is further contained.

23. An injection method as recited in any one of claims 14 to 21, wherein said Material A and said Material B are mixed together by any one of a one-shot method, a 1.5-shot method and a two-shot method, and then injected into a ground or the like.
